# EUROPÄISCHE PATENTSCHRIFT

(11) **EP 0 413 948 B1**
(45) Veröffentlichungstag und Bekanntmachung des Hinweises auf die Patenterteilung: **22.03.1995**
(21) Anmeldenummer: 90113494.0
(22) Anmeldetag: 13.07.1990
(51) Int. Cl.: H04B 10/10, G08G 1/09, F21M 3/14

(54) **System zur optischen Datenübertragung, vorzugsweise für die automatische Entrichtung von Strassennutzungsgebühren**
System for optical data transmission, preferably for the automatic payment of road taxes
Système de transmission optique de données, de préférence pour la perception automatique des redevances routières

(30) Priorität: 21.08.1989 EP 89115386
(43) Veröffentlichungstag der Anmeldung: 27.02.1991
(73) Patentinhaber: SIEMENS AKTIENGESELLSCHAFT, 80333 München (DE)
(72) Erfinder: Engelmann, Gottfried, D-8130 Starnberg (DE)

(56) Entgegenhaltungen:
- DE-C- 3 718 642
- FR-A- 558 100
- US-A- 4 325 146
- FUNKSCHAU, Band 58, Nr. 22, Oktober 1986, Seiten 99-102, München, DE; G.-L.RADKE: "Elektronische Lotsen"

## Beschreibung

Die Erfindung betrifft ein System zur optischen Datenübertragung zwischen einer ortsfesten, im Bereich einer Fahrbahn vorgesehenen Station und einzelnen passierenden Fahrzeugen gemäß dem Oberbegriff des Anspruchs 1.

Der Informationsaustausch zwischen Fahrzeugen und ortsfesten Einrichtungen mit optischer Datenübertragung, insbesondere mit Infrarotstrahlung, ist bekannt, beispielsweise aus der DE-A-28 26 055 oder der DE-A-32 48 544. Derartige Systeme werden in Ortungs- und Leitsystemen eingesetzt, um einerseits vom Fahrzeug Informationen und Daten, beispielsweise Verkehrsdaten, wie Reisezeiten und Stauzeiten, an ortsfeste Baken zu übertragen und um andererseits von den ortsfesten Baken Informationen und Daten, wie beispielsweise Leitinformationen zur Zielführung des Fahrzeuges, in das Fahrzeuggerät zu übertragen. Wenn bei einem Leitsystem von einer Bake im wesentlichen gleiche Informationen an alle passierenden Fahrzeuge abgestrahlt werden, spielt es keine Rolle, wenn sich gleichzeitig mehrere Fahrzeuge im Strahlungsbereich der ortsfesten Station befinden. Auch hinsichtlich der von den Fahrzeugen gesendeten Information ist es im allgemeinen nicht kritisch, wenn die ortsfeste Station gleichzeitig Signale von mehreren Fahrzeugen empfängt, da in diesen üblichen Fällen jeweils die Information für sich ausgewertet wird und keinen Bezug zu einem bestimmten Fahrzeug erfordert.

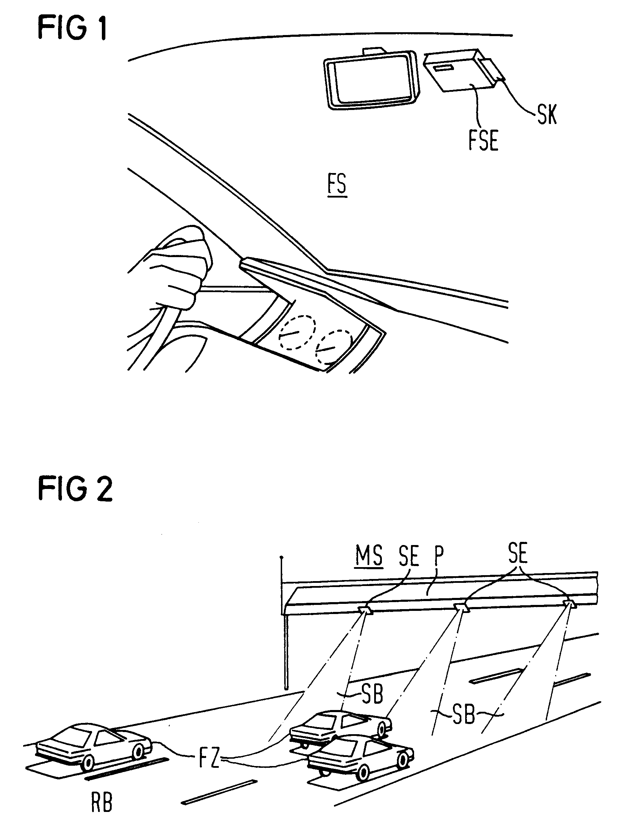

Es gibt jedoch auch Einsatzfälle, bei denen die zu übertragende Information in beiden Richtungen einem ganz bestimmten Fahrzeug zugeordnet sein muß. Dies ist beispielsweise dann der Fall, wenn mittels eines derartigen Informationsübertragungssystems in einem Fahrzeuggerät eine automatische Gebührenzahlung vorgenommen werden soll, etwa durch automatische Abbuchung von Straßenbenutzungsgebühren von einem im Fahrzeuggerät vorgesehenen, mit einem Geldwert geladenen Speicher. Dieser Speicher kann beispielsweise eine programmierbare Speicherkarte SK sein, die in bekannter Weise an einer Zahlstelle mit Hilfe eines Automaten mit einem wählbaren Geldbetrag aufgeladen wird. Die Karte wird anschließend im Fahrzeug in das erwähnte Fahrzeuggerät FSE eingesteckt, wie dies in Fig. 1 gezeigt ist. Nach dieser Darstellung ist das Fahrzeuggerät, welches eine Sende- und Empfangseinrichtung für Infrarotübertragung enthält, an der Windschutzscheibe FS angebracht, so daß unmittelbar der optische Informationsaustausch mit einer ortsfesten Station beim Vorbeifahren erfolgen kann. Jedesmal, wenn das Fahrzeug FZ eine Mautstelle MS passiert (siehe Fig. 2) wird automatisch eine bestimmte Gebühr von der Speicherkarte SK im Fahrzeug abgebucht. Der Datenaustausch zwischen der Mautstelle M und den einzelnen Fahrzeugen FZ geht dabei so vor sich, daß in der Mautstelle an einem Portal P befestigte stationäre Sende- und Empfangseinrichtungen SE in einem bestimmten Strahlungsbereich 58 Informationen aussenden und ebenfalls in einem solchen Strahlungsbereich - der in der Form abweichen kann, wie später noch beschrieben wird - Informationen von jeweils einem bestimmten Fahrzeug empfangen.

An der Mautstelle MS müssen zwei Teilaufgaben gelöst werden, die einander zu widersprechen scheinen:
a) mit jedem einzelnen Fahrzeug ist ein gesicherter Dialog für die Geldabbuchung zu führen, und zwar nach Regeln oder Verfahren, die denen einer bargeldlosen Zahlung mit Kredit- oder Debitkarten ähneln. Die Datensicherung bzw. Verschlüsselung kann z.B. nach DIS (Data Incription Standard) vorgenommen werden. Dieser Dialog hat auf mehrspurigen Straßen unabhängig von der Position der Fahrzeuge zu erfolgen; denn es kann nicht vorausgesetzt werden, daß die Fahrzeuge im Übertragungsbereich jeweils bestimmte Fahrstreifen einhalten. Auch wenn Fahrzeuge, etwa bei Überholvorgängen, die Fahrspuren wechseln, darf der gesicherte Dialog zwischen den stationären Einrichtungen (SE) an dem Portal P und den Fahrzeuggeräten in den Fahrzeugen FZ nicht gefährdet werden. Dies ist schon deshalb notwendig, um zu verhindern, daß einzelne Kraftfahrer bewußt regelwidrig fahren oder die Fahrspur wechseln, um einer Gebührenabbuchung zu entgehen.
b) Fahrzeuge, bei denen die entsprechende Gebührenabbuchung nicht ordnungsgemäß erfolgt ist oder bei denen sie absichtlich sabotiert wurde, müssen identifiziert werden. Hierfür ist eine exakte Lokalisierung unbedingt erforderlich. Zu diesem Zweck wird beispielsweise über bekannte Anwesenheitsdetektoren, etwa Induktionsschleifen in der Fahrbahn, jedes Fahrzeug beim Durchfahren detektiert, was in einem ganz bestimmten Lokalisierungsmeßbereich geschieht. Gleichzeitig muß über ein entsprechend übertragenes Quittungssignal sichergestellt werden, daß das lokalisierte Fahrzeug auch die entsprechende Gebühr entrichtet hat. Erfolgt diese Quittungsgabe nicht, weil beispielsweise das Fahrzeug überhaupt nicht mit einem Fahrzeuggerät FSE ausgestattet ist, so wird über geeignete Maßnahmen, etwa durch Fotografieren, das Fahrzeug identifiziert.

Sowohl der Dialog als auch die Lokalisierung von Fahrzeugen, von denen keine Gebühr entrichtet wurde, erfolgt nach standardisierten Verfahren, die nicht Gegenstand dieser Erfindung sind. Diese Verfahren setzen jedoch eine exakte räumliche Trennung des Dialogbereiches einerseits von dem Lokalisierungsmeßbereich andererseits voraus.

Nach dem erwähnten standardisierten Verfahren ist es durchaus möglich, in einem Zeitmultiplexverfahren einen Dialog mit zwei oder mehreren Fahrzeugen zu führen, die sich in dem Bereich befinden. Prinzipiell wäre es auch möglich, diesen Dialogbereich von dem Lokalisierungsbereich dadurch zu trennen, daß man die beiden Bereiche räumlich weit voneinander entfernt festlegt. Mit wachsender Ausdehnung und räumlicher Trennung wächst jedoch zwangsläufig die Übertragungsreichweite. Die in Fig. 2 angedeuteten keulenförmigen Strahlungsbereiche SB müßten mit zunehmender Ausdehnung auch flacher verlaufen, wodurch die Gefahr einer Abschattung nachfolgender Fahrzeuge, insbesondere durch sehr hohe vorausfahrende Fahrzeuge, zunähme. Dieser Effekt könnte sogar mißbraucht werden, indem Kraftfahrer an der Mautstelle bewußt direkt hinter Omnibussen oder Lastkraftwagen durchzuschlüpfen versuchten.

Es ist deshalb anzustreben, für den geschilderten Fall der Gebührenzahlung den Dialogbereich von dem Lokalisierungsbereich durch geeignete Ausgestaltung der Sende- und Empfangseinrichtungen an der Mautstelle möglichst scharf gegeneinander abzugrenzen:
Fährt ein Fahrzeug in den Dialogbereich ein, so soll der von ihm empfangene Strahlungspegel möglichst schnell anschwellen und nur geringfügig schwanken, so lange das Fahrzeug diesen Bereich durchführt. Andernfalls könnte die Übertragungssicherheit beeinträchtigt werden. Verläßt das Fahrzeug den Dialogbereich, so muß der Strahlungspegel der stationären Sendeeinrichtung an der Mautstelle schlagartig absinken. Für das nachfolgende Quittungssignal, das vom Fahrzeug zur stationären Empfangseinrichtung der Mautstelle übertragen wird, muß ebenfalls ein scharf umgrenzter Bereich definiert werden, der sich möglichst exakt mit einem Erfassungsbereich deckt, in welchem jedes durchfahrende Fahrzeug durch entsprechende Detektoreinrichtungen lokalisiert wird.

In der US-PS 4 325 146 ist ein System zur optischen Datenübertragung zwischen einer ortsfesten, im Bereich einer Fahrbahn vorgesehenen Station und einzelnen passierenden Fahrzeugen geoffenbart, bei dem in der Station über der Fahrbahn einerseits und in dem Fahrzeug andererseits jeweils mindestens eine Sendeeinrichtung mit einer Lichtsenderanordnung und/oder mindestens eine Empfangseinrichtung mit einer Lichtempfängeranordnung vorgesehen ist, wobei in der ortsfesten Sende- bzw.

Empfangseinrichtung jeweils eine den Fahrbereich der passierenden Fahrzeuge auf eine vor der Lichtsenderanordnung bzw. der Lichtempfängeranordnung liegende Bildebene abbildende optische Einrichtung vorgesehen ist. Über die Anordnung und Ausbildung von Masken für vorgebbare Blendenöffnungen für die optische Übertragungseinrichtung ist dabei nichts geoffenbart.

Es ist Aufgabe der Erfindung, ein System zur optischen Datenübertragung der eingangs genannten Art so auszugestalten und weiterzubilden, daß im Fahrbereich scharf abgegrenzte Sende- und/oder Empfangsbereiche festgelegt werden können, so daß ausschließlich in diesen abgegrenzten Bereichen der Informationsaustausch zwischen Fahrzeug und ortsfester Station möglich ist.

Erfindungsgemäß wird diese Aufgabe mit den Merkmalen des Anspruchs 1 gelöst.

Bei dem eingangs beschriebenen optischen Datenübertragungssystem sind erfindungsgemäß mehrere Masken mit einer Anzahl von Blendenöffnungen vorgesehen, um getrennte Wirkflächen zu bilden. Dabei werden für die Sendeeinrichtung eine Wirkfläche und für die Empfangseinrichtung zwei getrennte Wirkflächen gebildet, wobei die Blendenöffnungen getrennte Strahlungsbereiche für die Sendeeinrichtung und die Empfangseinrichtung bilden. Innerhalb der dafür vorgesehenen Strahlungsbereiche werden Daten zwischen der Station und einer Fahrzeugsende- und Empfangseinrichtung im Rahmen eines Dialogverkehrs sowie ein Quittungssignal übertragen. Hierzu ist die Abrißkante der Blendenöffnung der Sendeeinrichtung derart geformt, daß sich eine quer zur Fahrtrichtung, scharfe Kanten aufweisende Wirkfläche ergibt, aufgrund derer zumindest das Ende des Strahlungsbereiches der Sendeeinrichtung durch einen abrupten Empfangspegelsprung in der Fahrzeug-Sende- und Empfangseinrichtung erkannt wird und dadurch diese zur Abgabe des Quittungssignals veranlaßt wird.

In einer weiteren Ausgestaltung der Erfindung können dafür mehrere optische Systeme mit jeweils einer eigenen Maske oder ein optisches System mit einer Maske, dem mehrere Blendenöffnungen gemeinsam zugeordnet sind, vorgesehen sein.

Durch die erfindungsgemäß vorgesehene Maskierung in einer Abbildungsoptik in der ortsfesten Station werden also im Fahrbereich genau vorgegebene Wirkflächen, beispielsweise für die Trennung von Dialog- und Lokalisierungsbereichen, festgelegt, und ein Informationsaustausch mit dem Fahrzeug ist nur möglich, solange sich das Fahrzeug im Bereich einer dieser Wirkflächen befindet. Innerhalb der Wirkflächen selbst ergibt sich auch nicht das Problem eines schwankenden Empfangspegels, vielmehr wird innerhalb der Grenzen der Wirkfläche stets mit vollem Pegel empfangen.

Durch die scharfe Abgrenzung der Wirkflächen läßt sich für das eingangs geschilderte Problem der Unterscheidung zwischen Dialogbereich und Lokalisierungsbereich genau diejenige Linie festlegen, an der der Dialogbereich endet. Verläßt das Fahrzeug diesen Dialogbereich, so sinkt der Strahlungspegel ruckartig ab; diese sogenannte "Abrißkante" des stationären Strahlungssenders trennt also den Dialogbereich vom Lokalisierungsbereich und kann dazu ausgenutzt werden, im Fahrzeuggerät das Aussenden des erwähnten Quittierungssignals auszulösen. Durch die erfindungsgemäße Maskierung ist es weiterhin möglich, in dem Anwendungsfall der Mautstelle auch den Lokalisierungsbereich sehr exakt abzugrenzen, so daß er mit dem Erfassungsbereich eines Fahrzeugdetektors, beispielsweise eines Schleifendetektors, genau übereinstimmt. Aus der Koinzidenz des Detektorsignals mit dem Quittierungssignal des zugeordneten Empfängers in der stationären Empfangseinrichtung der Mautstelle kann somit die ordnungsgemäße Gebührenentrichtung für das festgestellte Fahrzeug bestätigt werden. Wird sie nicht bestätigt, so können weitere Schritte zur Identifizierung des Fahrzeugs eingeleitet werden.

Die Form der Wirkfläche kann durch die Form der Blendenöffnung in der Maske beliebig festgelegt werden. In der Regel wird man eine rechteckige Wirkfläche entsprechend der Fahrzeuggrundfläche und der geplanten Verweildauer festlegen, was bei einem annähernd senkrechten Winkel zwischen Fahrbahn und Abbildungsebene durch eine trapezförmige Blendenöffnung in der Maske erreicht wird. Kommt es jedoch lediglich auf eine scharfe Abschlußkante der Wirkfläche an, so kann eine halbmondförmige Blendenöffnung in der Maske vorgesehen werden.

Die abgegrenzte Wirkfläche könnte im Bereich der Straßenoberfläche festgelegt werden. Da jedoch die Fahrzeugsender und Empfänger in der Regel im oberen Bereich des Fahrzeugs, beispielsweise im Bereich der Frontscheibe oder am Dach, angeordnet sind, wird die jeweilige Wirkfläche in einer entsprechenden Höhe über die Straßenoberfläche definiert.

Die optische Einrichtung, die durch ein handelsübliches Kameraobjektiv gebildet sein kann, ist zweckmäßigerweise gegen die Fahrbahn geneigt, und zwar derart, daß ihre optische Achse etwa die Wirkfläche in deren Mittelbereich schneidet. Werden mit dem optischen System beispielsweise zwei Wirkflächen definiert, so kann die optische Achse in den Steg zwischen den hintereinanderliegenden Wirkflächen gelegt werden. Weiterhin kann es zweckmäßig sein, die durch die Maske gebildete Bildebene sowohl gegenüber der Fahrbahn als auch gegenüber der Objektivebene geneigt anzuordnen, um eine möglichst geringe Verzerrung der Abbildung zu erreichen. Zweckmäßig ist dabei, wenn die sogenannte Scheimpflugbedingung erfüllt wird, d.h., daß sich die Wirkflächenebene, die Objektivebene und die Bildebene in einer Linie schneiden.

Die Senderanordnung wird zweckmäßigerweise durch ein Sendediodenfeld, die Empfängeranordnung durch ein Empfangsdiodenfeld gebildet, wobei es sich in bevorzugter Ausführungsform jeweils um Infrarotdioden handelt. Insbesondere für die Sendedioden ist es weiterhin zweckmäßig, daß die Diodenachsen zum Mittelpunkt der optischen Einrichtung radial ausgerichtet sind, wobei sie zweckmäßigerweise auf einer konkaven, vorzugsweisen sphärischen Rückwandfläche angeordnet sind. Um eine möglichst gute und gleichmäßige Strahlungsintensität zu erzeugen, wird zweckmäßigerweise die Rückwandfläche hinter den Sendedioden verspiegelt. Eine weitere Verbesserung der Bestrahlungsstärke ergibt sich, wenn auch die Seitenwände des Raumes zwischen der Senderanordnung und der Maske reflektieren. Je nach Anwendungsfall kann es sich dabei um eine spiegelnde Hohlzylinderwand oder um eine aus Planspiegeln gebildete Prismenwand handeln. Um die Strahlungsintensität möglichst gleichmäßig zu verteilen, wird zweckmäßigerweise zusätzlich jeweils im Bereich zwischen der Senderanordnung bzw. der Empfängeranordnung und der Maske eine lichtstreuende Vorrichtung vorgesehen, beispielsweise in Form eines Diffusors, eines Weichzeichners oder dergleichen. Möglich ist es auch, die erwähnte Spiegeloberfläche uneben zu gestalten und dadurch das reflektierte Licht zu streuen.

Da durch die schräge Abstrahlung des Lichtes auf die Fahrbahn die Intensität des in den Fernbereich abgestrahlten Lichtes abnimmt, ist es weiterhin zweckmäßig, in der Senderanordnung die Dichte an Sendedioden in dem Bereich zu verstärken, der in den Fernbereich strahlt.

Die Erfindung wird nachfolgend an Ausführungsbeispielen anhand der Zeichnung näher erläutert. Es zeigt
- Fig. 1: eine perspektivische Innenansicht der Fensterscheibe eines Fahrzeuges mit einem Fahrzeuggerät zur Infrarot-Datenübertragung,
- Fig. 2: die Darstellung einer Richtungsfahrbahn mit einer automatischen Mautstelle,
- Fig. 3: eine perspektivische Schemadarstellung einer automatischen Mautstelle auf einer Straße mit ortsfesten Sendeund Empfangseinrichtungen sowie den von ihnen erfaßten Wirkflächen,
- Fig. 4: eine Prinzipdarstellung der erfindungsgemäß eingesetzten optischen Abbildung,
- Fig. 5 bis 9: verschiedene Möglichkeiten von Maskenkonfigurationen,
- Fig. 10: eine Empfängeroptik im Querschnitt,
- Fig. 11: die schematische Darstellung einer Senderoptik und
- Fig. 12 und 13: die gemeinsame Anordnung von Sender- und Empfängeroptik in zwei Schnittansichten,
- Fig. 14 a - d: eine Darstellung der Sende- und Empfangsbereiche bei einer automatischen Gebührenzahlung für Personenfahrzeuge sowie die jeweiligen Verläufe der Sende- und Empfangspegel in Diagrammdarstellung und
- Fig. 15 a - d: eine Fig. 14 entsprechende Darstellung für die Gebührenzahlung bei Lastkraftwagen.

Die Figuren 1 und 2 wurden bereits eingangs kurz erwähnt. Fig. 1 zeigt dabei einen Ausschnitt des Armaturenbretts eines Fahrzeugs FZ mit der darüber schräg verlaufenden Frontscheibe FS. An dieser Frontscheibe ist ein Fahrzeuggerät, nämlich eine Fahrzeug-Sende- und Empfangseinrichtung FSE angebracht, welche einen Infrarotempfänger sowie einen Infrarotsender zum Datenaustausch zwischen dem Fahrzeug und einer ortsfesten Station enthält. In dieses Fahrzeuggerät FSE wird die erwähnte Speicherkarte SK, welche mit einem bestimmten Geldbetrag aufgeladen wurde, eingesteckt.

Die Fig. 2 zeigt ebenfalls für den Anwendungsfall einer automatischen Gebührenentrichtung eine Autobahn, und zwar lediglich eine Richtungsfahrbahn RB, auf der mehrere Fahrzeuge FZ unterwegs sind. Diese Fahrzeuge FZ passieren eine automatische Mautstelle MS mit einem Portal P über der Richtungsfahrbahn RB, wobei an dem Portal stationäre Sende- und Empfangseinrichtungen SE angebracht sind. Diese Sende- und Empfangseinrichtungen SE erfassen jeweils mit einem Strahlungsbereich SB die passierenden Fahrzeuge FZ, um in den Fahrzeuggeräten FSE die erwähnte Abbuchung der Gebühr vorzunehmen. Die Fahrzeuge brauchen zu diesem Zweck weder anzuhalten noch die Geschwindigkeit wesentlich zu verringern, solange diese in einem Bereich liegt, der bei den vorgegebenen Wirkflächen einen ausreichenden Dialog ermöglicht.

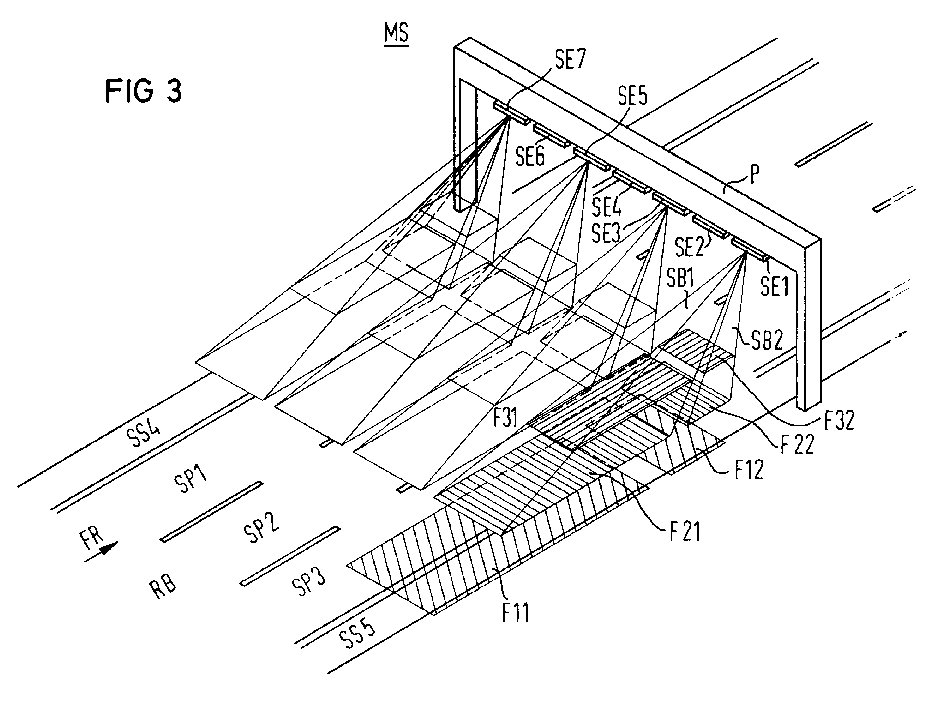

In Fig. 3 ist schematisch die Bildung von Wirkflächen an einer automatischen Mautstelle MS gezeigt, wobei über der Richtungsfahrbahn RB mit drei Fahrspuren SP1, SP2 und SP3 sowie den Seitenstreifen SS4 und SS5 eine Portalanordnung P als ortsfeste Sende- und Empfangsstation angeordnet ist. In dieser ortsfesten Station sind am Querträger des Portals P einzelne Sende- und Empfangseinrichtungen SEI bis SE7 angeordnet, welche schräg zur Fahrbahn auf die passierenden Fahrzeuge gerichtet sind; die Fahrtrichtung ist durch den Pfeil FR angedeutet. Die Zahl der Sende- und Empfangseinrichtungen ist größer als die Anzahl der Fahrspuren, so daß alle Fahrzeuge lückenlos erfaßt werden, selbst wenn sie nicht in einer bestimmten Spur - oder sogar auf einem Seitenstreifen - fahren. Jede Sende- und Empfangseinrichtung besitzt einen Strahlungsbereich SB. Diese Strahlungsbereiche überschneiden einander; der Übersichtlichkeit halber sind deshalb nur für einige der Sende- und Empfangseinrichtungen zugehörige Strahlungsbereiche angedeutet.

Um einen einwandfreien Dialog für den Abbuchungsvorgang zwischen Fahrzeug und Mautstelle zu gewahrleisten, sind die Sendeund Empfangseinrichtungen SE1 bis SE7 erfindungsgemäß so ausgestaltet, daß sie ihre Lichtstrahlung jeweils auf genau definierte Wirkflächen abstrahlen und umgekehrt die Lichtstrahlung bzw. Infrarotstrahlung von dem einzelnen Fahrzeug ebenfalls nur aus den genau definierten Wirkflächen empfangen. In Figur 3 sind einige derartige Wirkflächen angedeutet. So ist beispielsweise für die Sende- und Empfangseinrichtung SE1 angedeutet, daß aufgrund der später noch zu beschreibenden Maskenoptik im Gerät zwei pyramidenförmige, scharfkantig begrenzte Strahlbereiche SB1 und SB2 gebildet sind. Das bedeutet also beispielsweise, daß in der Sende- und Empfangseinrichtung SE1 nur Infrarotlicht von einem Fahrzeug empfangen werden kann, welches innerhalb des Strahlbereiches SB1 oder des Strahlbereiches SB2 ankommt. Wo der Strahlbereich SB1 die Fahrbahn schneidet, wird eine Wirkfläche F11 gebildet, entsprechend bildet der Strahlbereich SB2 in der Schnittfläche mit der Fahrbahn RB die Wirkfläche F12. Diese Wirkflächen F11 und F12 sind diagonal schraffiert gekennzeichnet.

Da ein Fahrzeug jedoch nicht in Fahrbahnhöhe sendet, sondern im Bereich der Frontscheibe oder am Dach, gilt nicht die an der Fahrbahn liegende Wirkfläche, sondern eine entsprechend in Höhe des Senders verlaufende Wirkfläche. Das ist für einen Personenkraftwagen beispielsweise die Empfangswirkfläche F21 am Schnittpunkt mit dem Strahlbereich SB1 und die Wirkfläche F22 in der Schnittebene mit dem Strahlbereich SB2. Diese als Empfangswirkflächen für einen Personenkraftwagen geltenden Wirkflächen F21 und F22 sind quer gestreift gezeichnet. Man sieht aus dem Verhältnis der Fläche F11 zur Fläche F21 beispielsweise, daß aufgrund der optischen Ausbreitung die höherliegenden Wirkflächen, welche näher am Sender bzw. am Empfänger liegen, kleiner sind. Bei der Dimensionierung muß also darauf geachtet werden, daß die tatsächlichen Wirkflächen groß genug bemessen sind, um eine genügend lange Verweildauer des Fahrzeugs in der betreffenden Wirkfläche zu gewährleisten, daß der notwendige Dialog abgewickelt werden kann.

Noch kleiner ist die Wirkfläche, wenn der Fahrzeugsender etwa am Dach eines Lastwagens angeordnet ist. In diesem Fall ergibt sich im Strahlbereich SB1 die Wirkfläche F31 und im Strahlbereich SB2 die Wirkfläche F32. Diese für Lastkraftwagen geltenden Wirkflächen sind längsgestreift gekennzeichnet. Da Lastkraftwagen jedoch in der Regel langsamer fahren als Personenkraftwagen, genügt in der Regel eine kleinere Wirkfläche, um den notwendigen Dialog abzuwickeln, so daß der Strahlbereich nicht wegen der höherliegenden Sender in Lastkraftwagen größer eingestellt werden muß. Wie eingangs bereits ausführlich geschildert wurde, sollen die Wirkflächen möglichst scharf gegeneinander abgegrenzt sein, um Fahrzeuge, die den Abbuchungsdialog führen, von denen zu trennen, die ihr Quittungssignal aussenden.

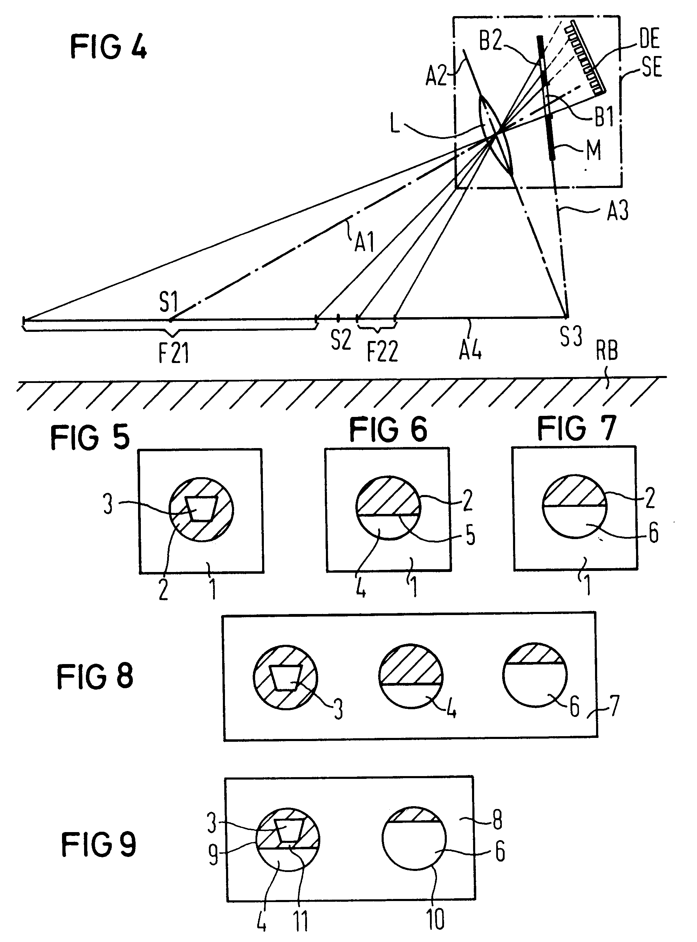

Das Prinzip der Erzeugung scharf abgegrenzter Wirkflächen soll nun anhand der schematischen Figur 4 kurz allgemein erläutert werden. In der Sende- und Empfangseinrichtung SE ist eine optische Anordnung, beispielsweise eine Linse L vorgesehen, welche den Fahrbahnbereich auf einer Bildebene abbildet, die durch eine Maske M dargestellt wird. Wenn es sich um eine Empfangseinrichtung handelt, so wird das aus dem Fahrbahnbereich kommende Licht über die Linsenanordnung L durch die Bildebene hindurch auf Empfangsdioden DE geworfen. Handelt es sich um eine Sendeeinrichtung, so sind anstelle der Empfangsdioden DE entsprechende Sendedioden vorgesehen, deren Licht durch die Linsenanordnung auf den Fahrbahnbereich geworfen wird. Da die Maske M die Bildebene abdeckt, kann das jeweilige Licht nur durch die Blendenöffnungen B1 und B2 hindurchtreten. Durch die Gestalt dieser Blendenöffnungen B1 und B2 werden dann im Fahrbahnbereich bzw. in einer entsprechend über der Fahrbahn liegenden Ebene die anhand von Figur 1 bereits beschriebenen Wirkflächen begrenzt. In Figur 4 wird also durch die Blendenöffnung B1 die Wirkfläche F21 und durch die Blendenöffnung B2 die Wirkfläche F22 festgelegt. Ein Fahrzeug auf der Richtungsfahrbahn RB kann also mit den Sendedioden bzw. Empfangsdioden nur einen Dialog führen, solange sich dieses Fahrzeug oder, genauer gesagt, sein Infrarot-Sender bzw. -Empfänger im Bereich der Wirkflächen F21 oder F22 befindet.

Die optische Einrichtung L wird zweckmäßigerweise so ausgerichtet, daß die optische Achse die Wirkfläche etwa in deren Mittelbereich schneidet, wie dies in Figur 4 am Punkt S1 bezüglich der Wirkfläche F21 gezeigt ist. Dies ist allerdings nur dann zweckmäßig, wenn eine einzige Wirkfläche vorhanden ist. Wenn, wie in Figur 4 weiterhin angedeutet, eine zweite Wirkfläche F22 vorgesehen ist, wäre es zweckmäßig, entgegen der Darstellung in Figur 4 die optische Einrichtung L weiter zu neigen, so daß ihre optische Achse die Wirkebene im Bereich zwischen den Wirkflächen F21 und F22, also am Punkt S2 schneiden würde.

Weiterhin ist es zweckmäßig, die optischen Einrichtung L und die Maske M so zueinander auszurichten, daß die Objektivebene A2 der optischen Einrichtung und die Bildebene A3 der Maske die Gegenstandsebene A4 (die Ebene der Wirkflächen F21 und F22) in eine Linie, die durch den Punkt S3 geht, schneiden (Erfüllung der Scheimpflugbedingung). Auf diese Weise werden Verzerrungen bei der Abbildung weitgehend ausgeschaltet.

In den Figuren 5 bis 7 sind beispielsweise drei verschiedene, für den vorliegenden Einsatzfall zweckmäßige Ausgestaltungen der Maske bzw. der Blendenöffnungen gezeigt. So zeigt Figur 5 in einer Maske 1 ein kreisförmiges Maskenfeld 2, in welchem eine trapezförmige Blendenöffnung vorgesehen ist. Durch diese trapezförmige Blendenöffnung wird eine rechteckige Wirkfläche erzeugt, wie sie in Figur 3 beispielsweise dargestellt ist. Eine solche Wirkfläche ist in ihren vier Seiten scharf abgegrenzt, wobei die Abmessungen der einzelnen Seitenlängen durch die Gestaltung der Blendenöffnung 3 und durch die Auslegung des optischen Systems festgelegt werden können.

Figur 6 zeigt in einem kreisförmigen Maskenfeld 2 eine halbmondförmige Blendenöffnung 4. Eine solche Gestaltung ist zweckmäßig, wenn es lediglich auf die Einhaltung einer scharfen Vorderkante für eine Wirkfläche ankommt. Eine solche scharfe Vorderkante wird durch die Kante der Blendenöffnung festgelegt, während die übrige, kreisförmige Umrandung der Blendenöffnung eine entsprechende keulenförmige Gestaltung des Wirkfeldes ergibt. Für den Anwendungsfall von Figur 3 ist es beispielsweise zweckmäßig, zwei unterschiedliche Wirkfelder für den Empfang vom Fahrzeug vorzusehen, wobei lediglich für das Wirkfeld F22 eine rechteckige Gestaltung notwendig ist, während für das Wirkfeld F21 lediglich eine scharfe Vorderkante, in Figur 3 mit F21 bezeichnet, notwendig ist. Um Mißverständnisse zu vermeiden, sei darauf hingewiesen, daß die Wirkfläche F21 in Figur 3 nicht der, Blendenöffnung von Figur 6 entspricht, sondern einer Blendenöffnung von Figur 5, daß aber für den praktischen Einsatzfall anstelle der Wirkfläche F21 eine durch die Blendenöffnung 4 erzielte keulenförmige Wirkfläche mit einer scharfen Vorderkante F21 eingesetzt werden kann.

Figur 7 zeigt wiederum eine halbmondförmige Blendenöffnung 6, wobei die Blendenöffnung mehr als die Hälfte des Maskenfeldes 2 einnimmt. Eine solche Blendenöffnung wird zweckmäßigerweise für eine Senderoptik verwendet, wenn mit der stationären Sendeeinrichtung eine verhältnismäßig breit ausladende Wirkfläche mit lediglich einer scharfen Vorderkante erzeugt werden soll. Dadurch werden mit nebeneinander liegenden Sendeeinrichtungen überlappende Wirkflächen im Fahrbereich erzeugt, um auf jeden Fall auch zwischen den Fahrspuren oder schräg dazu fahrende Fahrzeuge zu erreichen.

Entsprechend den Figuren 5 bis 7 können die dort gezeigten Masken mit verschiedenen Blendenöffnungen 3, 4 und 6 einzeln angewendet und mit jeweils einer eigenen optischen Einrichtung kombiniert werden. Will man also mit der Blendenöffnung 3 und der Blendenöffnung 4 zwei verschiedene Wirkflächen für die Empfangseinrichtung und mit der Blendenöffnung 6 eine dritte Wirkfläche für die Sendeeinrichtung erzeugen, so kann man drei verschiedene optische Einrichtungen mit drei unterschiedlichen Masken 1 und mit entsprechend zugeordneten Sender- bzw. Empfängeranordnungen kombinieren. Zweckmäßiger ist es, entsprechend Figur 8 die drei Maskenfelder 2 in einer einzigen Maske 7 vorzusehen und zu kombinieren, wobei auch bei einer Anordnung gemäß Figur 8 drei verschiedene optische Einrichtungen nebeneinander angeordnet werden müssen.

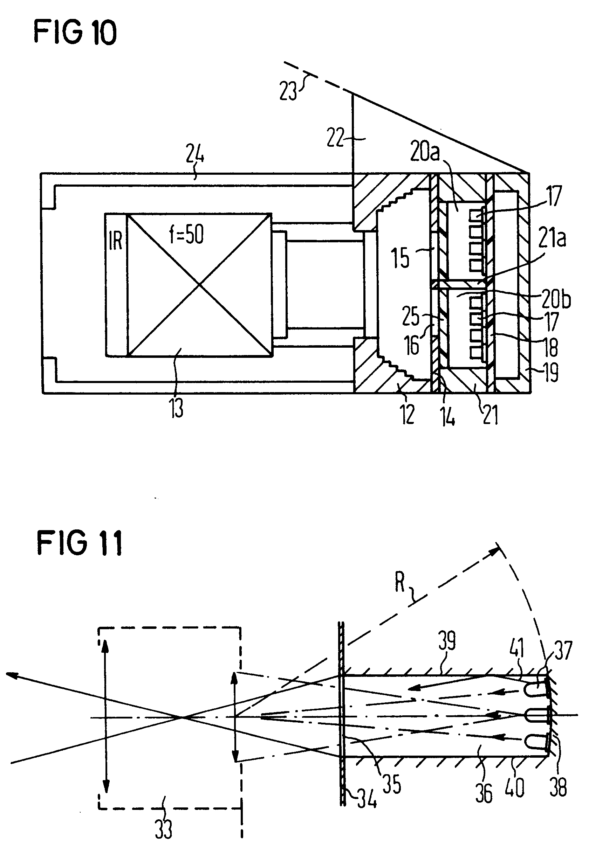

Man kann aber mehrere Blendenöffnungen in einem Maskenfeld kombinieren und einer gemeinsamen optischen Einrichtung zuordnen, so daß zwei oder auch mehr getrennte Wirkflächen über ein einziges Maskenfeld und eine einzige optische Anordnung erzeugt werden.Figur 9 zeigt beispielsweise eine Maske 8, wobei in einem ersten Maskenfeld 9 die beiden Blendenöffnungen 3 und 4 kombiniert angeordnet sind, während in einem zweiten Maskenfeld 10 die Blendenöffnung 6 ausgebildet ist. So können also beispielsweise über eine einzige Empfängeroptik die beiden Wirkfelder F21 und F22 in Figur 3 erzeugt werden, wobei der Steg 11 in Figur 9 einen abgegrenzten Bereich zwischen beiden Wirkfeldern erzeugt, in welchem kein Empfang möglich ist. Zur Klarstellung sei hier nochmals erwähnt, daß die Form der Wirkfläche F21 in Figur 3 nicht durch die Blendenöffnung 4 gemäß Figur 9 erzeugt wird. Wollte man die Rechteckform der Wirkfläche F21 ebenfalls rechteckig wie die der Wirkfläche F22 erzeugen, so müßte in Figur 9 die Blendenöffnung 4 ähnlich wie die Blendenöffnung 3 ebenfalls trapezförmig gestaltet werden. Die Blendenöffnung 6 dient für die Erzeugung einer Sende-Wirkfläche, wie bereits erwähnt, wobei für die Sendeeinrichtung und das Maskenfeld 10 eine eigene optische Einrichtung erforderlich ist.

Eine mögliche Ausgestaltung einer Empfangseinrichtung mit zwei Wirkflächen ist in Figur 10 schematisch gezeigt. In einem Gehäuse 12 ist eine optische Einrichtung 13 vorgesehen, beispielsweise in Form eines Kameraobjektivs, das an eine offene Seite des Gehäuses angebaut wird. Der optischen Einrichtung 13 gegenüberliegend ist im Gehäuse eine Maske 14 angeordnet, welche beispielsweise zwei Blendenöffnungen 15 und 16 entsprechend den Blendenöffnungen 3 und 4 in Figur 9 aufweist. In dem Raum 20 hinter der Maske sind Empfängerdioden 17 angeordnet, die das durch die optische Einrichtung 13 und die jeweilige Blendenöffnung 15 oder 16 eintreffende Licht aufnehmen sowie die damit verbundene Information auswerten. Die Dioden 17 sitzen auf einer Leiterplatte 18, die im übrigen eine übliche Auswerteschaltung trägt. Die Rückseite der Leiterplatte wird mit einem Deckel 19 abgeschlossen.

Der Empfängerraum 20 ist durch eine Zwischenwand 21a in zwei getrennte Räume 20a und 20b unterteilt, so daß die Empfangsdioden 17 in dem ersten Empfangsraum 20a das durch die Blendenöffnung 15 fallende Licht, die Empfangsdioden 17 im Empfängerraum 20b das durch die Blendenöffnung 16 fallende Licht empfangen.

Gemäß Darstellung in Figur 10 sind verschiedene Gehäuseteile als Einzelteile zusammengefügt, beispielsweise ist an das Gehäuse 12 die Maske 14 angefügt,dann der Empfängerraum 20 mit einer Wand 21. Es ist aber in einer zweckmäßigen Ausgestaltung auch möglich, das Gehäuse 12 mit der Maske 14 und der Empfängerraumwand 21 in einem Block auszubilden. Dieser Block kann zusätzlich ein Adapterteil 22 aufweisen, welches bereits einen vorgegebenen Neigungswinkel der Empfangseinrichtung und gegebenenfalls einer im gleichen Gehäuse untergebrachten Sendeeinrichtung gegenüber der Befestigungsebene 23 an der Unterseite des Portals P (Figur 3) festlegt. Damit erübrigt sich eine Justierarbeit beim Einbau der Sende- und Empfangseinrichtungen. Die optische Einrichtung kann zusätzlich mit einer Gesichtsfeldblende 24 versehen sein.

Figur 11 zeigt weiterhin schematisch eine zweckmäßige Ausgestaltung einer Sendeeinrichtung. Diese Sendeeinrichtung besitzt wiederum eine optische Einrichtung 33, welche wiederum durch ein handelsübliches Kameraobjektiv gebildet sein kann. In der Bildebene ist, wie bereits beschrieben, eine Maske 34 mit einer Blendenöffnung 35 angeordnet. Dahinter liegt ein Senderraum 36, an dessen Rückseite die einzelnen LED-Sendedioden 37 angeordnet sind. Um eine möglichst gute Lichtausbeute für die Sendeeinrichtung zu erhalten, ist die Rückwand 38 sphärisch gekrümmt, so daß die einzelnen Sendedioden mit ihrer Achse auf die Mitte der optischen Einrichtung ausgerichtet sind. Der Mittelpunkt für den Radius R der Rückwand 38 liegt also in der Mitte des Eingangs zur optischen Einrichtung 33, so daß alle Hauptstrahlen der Sendedioden durch den Mittenbereich der optischen Einrichtung gehen.

Um jedoch auch die Reststrahlung auszunutzen, ist die Rückwand 38 an ihrer Oberfläche zweckmäßigerweise verspiegelt. Außerdem sind die Seitenwände 39 und 40 ebenfalls verspiegelt, um die Seitenstrahlung, beispielsweise mit dem Strahl 41 angedeutet, in die optische Anordnung zu lenken. Dadurch ergibt sich eine möglichst gute Ausnutzung des Senderlichtes, was im Hinblick auf die relativ großen Wirkflächen im entfernten Fahrbahnbereich wichtig ist. Die Seitenwände 39 und 40 können, ebenso wie die nicht sichtbaren restlichen Seitenwände, als Planspiegel ausgebildet sein. Es wäre aber denkbar, je nach Anwendungsfall eine zylinderförmige oder anderweitig gestaltete Seitenwand vorzusehen, welche an ihrer Innenseite verspiegelt ist.

Um eine möglichst gleichmäßige Abstrahlung bzw. Aufnahme des jeweiligen Sender- bzw. Empfängerlichtes zu gewährleisten, ist weiterhin im Bereich zwischen den Dioden 17 bzw. 37 und der Maske 14 bzw. 34 eine lichtstreuende Einrichtung vorgesehen. In Figur 10 ist beispielsweise eine Diffusorscheibe 25 gezeigt. Eine entsprechende Scheibe kann auch in Figur 11 vorgesehen werden, obwohl sie dort nicht gezeigt ist. Es sind aber anstelle einer Diffusorscheibe auch andere Möglichkeiten zur Lichtstreuung einsetzbar, beispielsweise eine Weichzeichnereinrichtung oder eine gerippte Ausführung der verspiegelten Seitenwände. Zur besseren Ausnutzung der abgegebenen Strahlung kann an dieser Stelle auch ein Kondensor, z.B. eine Fresnellinse, angebracht sein. Die Gehäuseinnenwände im Bereich zwischen Maske und optischer Einrichtung sind übrigens nach Möglichkeit geschwärzt oder sonstwie lichtabsorbierend ausgebildet, um die gewünschte scharfe Abgrenzung der Wirkflächen nicht zu verwischen.

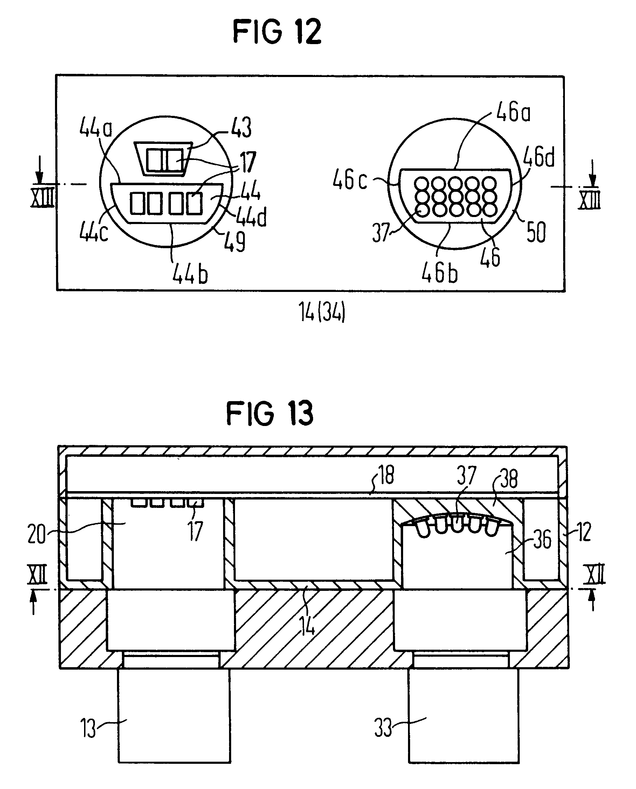

Wie bereits erwähnt, können jeweils die Sendeeinrichtung und die Empfangseinrichtung in einem gemeinsamen Gehäuse untergebracht werden. Figuren 12 und 13 zeigen in zwei schematischen Ansichten ein solches Gehäuse, wobei die Ausgestaltung im einzelnen teilweise von der Darstellung in den Figuren 10 und 11 abweicht. Trotzdem werden für Teile mit gleicher Funktion auch die gleichen Bezugszeichen verwendet. Figur 12 zeigt die Vorderansicht einer Maske 14, die in einem Stück auch die in Figur 11 angedeutete Maske 34 beinhaltet. In dieser Maske sind die Maskenfelder 49 und 50 vorgesehen, welche ihrerseits die Blendenöffnungen 43 und 44 sowie 46 enthalten. Hinter diesen Blendenöffnungen sind teilweise Empfängerdioden 17 und Sendedioden 37 sichtbar. Die Blendenöffnung 43 entspricht der Blendenöffnung 3 in Fig. 5 bis 9; sie ergibt eine rechteckige Wirkfläche. Die Blendenöffnung 44 besitzt für den später noch zu beschreibenden Anwendungsfall zwei gerade Abschlußkanten 44a und 44b, wodurch eine Wirkfläche mit je einer exakten Kante an der Vorderseite und an der Rückseite gebildet wird, während die verbleibenden kreisbogenförmigen Seitenkanten 44c und 44d der Blendenöffnung einen weniger scharf abgegrenzten Verlauf der zugehörigen Wirkfläche im Seitenbereich ergibt. Das gleiche gilt für die Blendenöffnung 46 mit den Abschlußkanten 46a und 46b sowie den kreisbogenförmigen Seitenkanten 46c und 46d.

Figur 13 zeigt das Gehäuse von Figur 12 im Querschnitt. Dabei erkennt man die beiden getrennten optischen Einrichtungen 13 und 33 mit jeweils getrennten Räumen im Gehäuse 12, also einem Empfängerraum 20 und einem Senderraum 36. Eine gemeinsame Leiterplatte 18 trägt die Empfängerdioden 17 und die Auswerteschaltung auch für die Sendedioden, welche in der erwähnten sphärischen Anordnung auf einer Rückwand 38 gemäß Figur 11 sitzen.

In Figur 12 ist beispielsweise eine gleichmäßige Matrixanordnung der Sendedioden 37 zu sehen. Es ist jedoch zweckmäßig, die Verteilung der Dioden unterschiedlich entsprechend der Entfernung der zu bestrahlenden Wirkfläche zu gestalten. Da die unteren Sendedioden die weiter entfernten Teile der Wirkfläche bestrahlen müssen, wird deshalb entgegen der Darstellung bei einer zweckmäßigen Ausgestaltung im unteren Bereich der Sendeanordnung eine größere Dichte von Leuchtdioden vorgesehen als im oberen Bereich.

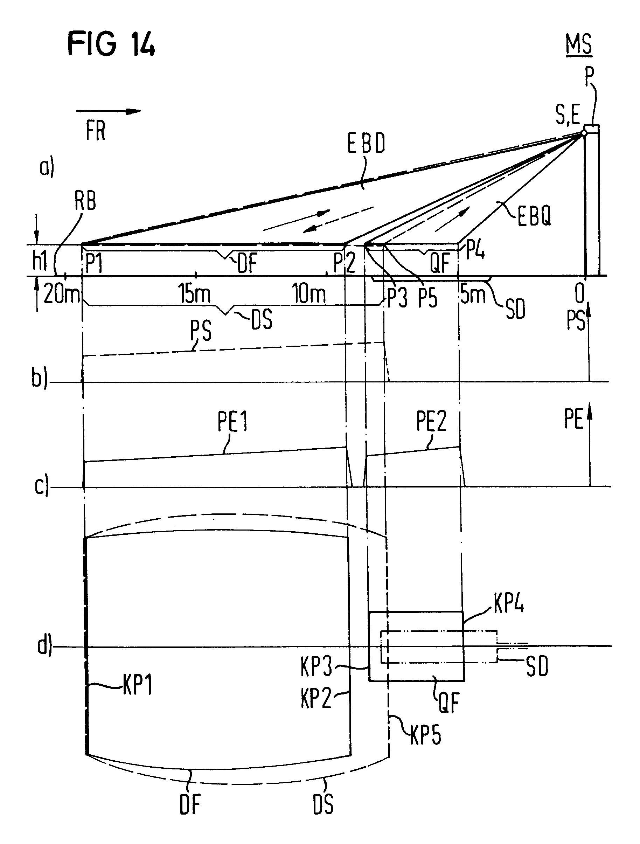

Anhand von Figur 14 soll nun für das bereits mehrfach genannte Anwendungsbeispiel der Erfindung, nämlich die automatische Entrichtung von Straßenbenutzungsgebühren, die Lage der jeweiligen Wirkflächen und der zugehörige Verlauf der jeweiligen Sendeund Empfangspegelbereiche im Fahrzeug einerseits und in der stationären Sende- und Empfangseinrichtung andererseits beschrieben werden. Figur 14a zeigt die Lage der jeweiligen Strahlungsbereiche über der Fahrbahnebene einer Richtungsfahrbahn RB und in der jeweiligen räumlichen Entfernung von dem Portal P mit den einzelnen Sende- und Empfangseinrichtungen SE. Da sich der Pkw-Sender und -Empfänger in einer Höhe h1 über der Fahrbahnebene R befindet, liegen die zugehörigen Wirkflächen in der entsprechenden Höhe. Unter Verwendung einer Maskenanordnung, wie in Figur 12 gezeigt ist, ergeben sich die folgenden Strahlungsbereiche bzw. Wirkflächen für einen Pkw:
Der Strahlungsbereich EBD, in Figur 14a durch die Punkte E, P1 und P2 begrenzt (durchgezogene Linie), ergibt eine Wirkfläche für den Dialogverkehr DF, die in der entsprechenden Höhe h1 zwischen den Punkten P1 und P2 liegt. Diese Wirkfläche wird durch die Blendenöffnung 44 in Figur 12 erzeugt. Das bedeutet, daß die Wirkfläche DF eine scharfe Anfangskante entsprechend der Kante 44b in Figur 12 sowie eine scharfe Abschlußkante KP2 entsprechend der Kante 44a besitzt, während die Seiten dieser Wirkfläche DF nicht scharf begrenzt sind. Dies ist in Figur 14d gezeigt.

Weiterhin ergibt sich durch die Blendenöffnung 43 in Figur 12 und den dadurch bedingten Quittungsempfänger Strahlungsbereich EBQ eine zweite Wirkfläche, die in Figur 14a durch die Punkte E, P3 und P4 begrenzt ist. Damit wird eine rechteckige Wirkfläche QF gebildet, die vier scharfe Kanten aufweist und genau den Bereich festlegt, in welchem das Fahrzeug ein Quittungssignal an die stationäre Empfangseinrichtung senden muß.

Durch die Blendenöffnung 46 in Figur 12 wird außerdem ein Senderstrahlungsbereich SBD (in Figur 14a gestrichelt umrahmt) gebildet, der in Figur 14a durch die Punkte S, P1 und P5 umrahmt ist. Hierdurch wird eine Sender-Wirkfläche DS zwischen den Punkten P1 und P5 in Figur 14a bzw. zwischen den Abschlußkanten KP1 und KP5 in Figur 14d gebildet, innerhalb dessen das Fahrzeuggerät im Dialogverkehr Informationen von der ortsfesten Sendeeinrichtung S empfangen kann. Die scharfen Abschlußkanten KP1 und KP5 dieser Sende-Wirkfläche DS werden durch die Kanten 46b bzw. 46a der Blendenöffnung 46 in Figur 12 gebildet, während auch in diesem Fall in den Seitenbereichen kein scharfer Abschluß der Wirkfläche vorgesehen ist. Wichtig ist vor allem die Abschlußkante KP5, durch die im Fahrzeug das Ende des Dialogverkehrs festgestellt wird. Gleichzeitig wird dieses Ende des Dialogverkehrs im Fahrzeug als Aufforderung zur Abgabe des Quittungsignals ausgewertet. Da sich das Fahrzeug zu diesem Zeitpunkt, also am Punkt P5, bereits in der Wirkfläche QF befindet, kann das danach abgegebene Quittungssignal im Bereich dieser Wirkfläche QF von der stationären Empfangseinrichtung E empfangen werden.

Figur 14b zeigt den Verlauf des Signalpegels im Fahrzeugempfänger, also des von der stationären Sendeeinrichtung S abgestrahlten und im Fahrzeug zu empfangenden Signals. Es hat im Bereich der Wirkfläche DS einen annähernd gleichbleibend hohen Pegel, im Punkt P1 eine steil ansteigende Flanke sowie im Punkt P5 eine steil abfallende Flanke, wodurch die erwähnten Abschlußkanten KP1 und KP5 gebildet werden.

Entsprechend zeigt Figur 14c den Pegelverlauf des vom Fahrzeug abgegebenen und in der stationären Empfangseinrichtung E empfangenen Signals. Hier zeigt sich, daß innerhalb der Wirkflächen DF und QF ein annähernd gleichbleibend hoher Pegel besteht, während dieser Pegel jeweils im Punkt P1 und P3 steil ansteigt (Kante KP1) und in den Punkten P2 und P4 jeweils steil abfällt (Kanten KP2 und KP4).

Der Wirkfläche QF, innerhalb der das Quittungssignal abzugeben ist, ist unterhalb der Fahrbahndecke RB ein Schleifendetektor zugeordnet, mit welchem jedes passierende Fahrzeug lokalisiert wird. In der Mautstelle kann somit jeweils bei Lokalisierung eines Fahrzeuges festgestellt werden, ob von dem betreffenden Fahrzeug, das sich dann im Bereich der Wirkfläche QF befindet, auch ein Quittungssignal über die Bezahlung der Mautgebühr abgegeben wird.

Der Ablauf der Gebührenzahlung ist demnach aus Figur 14 wie folgt abzulesen:
Ein Fahrzeug, das sich der Mautstelle MS nähert, tritt am Punkt P1 mit seinem Fahrzeuggerät FSE in den Bereich der Wirkfläche DF ein und erhält im Dialogverkehr mit der ortsfesten Sendeund Empfangseinrichtung SE die Aufforderung, einen bestimmten Gebührenbetrag abzubuchen. Am Punkt P2 verläßt das Fahrzeug die Wirkfläche DF; es kann also von diesem Punkt an zunächst keine Daten mehr an die stationäre Einrichtung übermitteln, empfängt jedoch von der stationären Einrichtung noch Informationen bis zum Punkt P5. Am Punkt P3 tritt das Fahrzeug bereits in die Wirkfläche QF ein und wird gleichzeitig durch den Schleifendetektor SD lokalisiert. Durch das Ende der Sender-Wirkfläche DS wird das Fahrzeuggerät zur Quittungsabgabe aufgefordert. Hat es nun von seinem Geldspeicher (Karte SK) den betreffenden Gebührenbetrag abgebucht, so kann es das Quittungssignal im Bereich der Wirkfläche QF abgeben, so daß es von der ortsfesten Empfangseinrichtung aufgenommen wird. Erfolgt keine Abgabe eines Quittungssignals, obwohl ein Fahrzeug über den Schleifendetektor SD lokalisiert wurde, so wird dies durch entsprechende Anzeigemittel am Portal oder an einer anderen Stelle angezeigt. Außerdem kann das Fahrzeug beispielsweise durch Photografieren identifiziert werden.

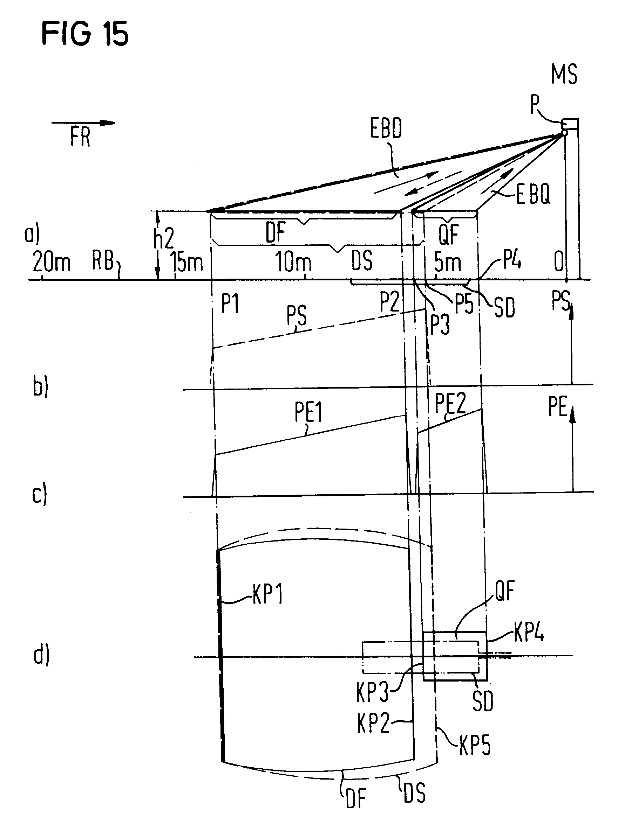

Figur 15 zeigt die entsprechende Lage der Wirkflächen für einen Lastkraftwagen, bei ansonsten gleicher Anordnung der orstsfesten Einrichtungen wie in Figur 14. Die einzelnen Punkte und Flächen sind deshalb in Figur 15 genauso bezeichnet wie in Figur 15. Die jeweiligen Punkte und Flächen sind hier lediglich aufgrund der höheren Anordnung der fahrzeugeigenen Sende- und Empfangseinrichtung FSE in einer Höhe h2 über der Richtungsfahrbahn RB entsprechend näher zum Portal hin verschoben. Dadurch sind die Abstände zwischen den Punkten P1 bis P5 bzw. den Kanten KP1 bis KP5 geringer. Der Ablauf des Dialoges zwischen Fahrzeug und stationärer Sende- und Empfangseinrichtung, die Lokalisierung und Quittungsgabe vollziehen sich jedoch in gleicher Weise wie bei einem Pkw, so daß die Beschreibung zu Figur 14 ohne weiteres auch für Figur 15 gilt.

Nach der eingangs erwähnten Prozedur, die nicht Gegenstand der Erfindung ist, werden mehrere Sende- und Empfangseinrichtungen über der Fahrbahn so angeordnet, daß lückenlos alle Fahrzeuge erfaßt werden. Dementsprechend werden in Anpassung an diese Prozedur auch bei dem erfindungsgemäßen System die Sende- und Empfangseinrichtungen über die Breite der Fahrbahn in einem gegenseitigen Abstand angeordnet, der geringer ist als eine vorgegebene Mindest-Fahrzeugbreite. Damit wird verhindert, daß ein Fahrzeug deshalb nicht erfaßt wird, weil es sich im gleichen Lokalisierungsbereich bzw. im gleichen Dialogbereich mit einem anderen Fahrzeug befindet. Die Anpassung des erfindungsgemäßen Systems bedeutet damit auch, daß sich die Wirkflächen der nebeneinanderliegenden Sende- und Empfangseinrichtungen seitlich überschneiden, daß jedoch die Abschlußkanten dieser Wirkflächen, beispielsweise KP2 oder KP5, übereinstimmen bzw. miteinander fluchten. Dies läßt sich besonders gut dadurch erreichen, daß die erfindungsgemäß vorgesehenen Sende- und Empfangseinrichtungen entsprechend Figuren 10 bis 13 in einem gemeinsamen Gehäuseblock untergebracht sind, wobei die Blendenöffnungen alle gleich im Gehäuse vorgegeben sind und auch der Neigungswinkel durch das Adapterstück gemäß Figur 10 für alle Gehäuse fest vorgegeben ist.

## Patentansprüche

1. System zur optischen Datenübertragung zwischen einer ortsfesten, im Bereich einer Fahrbahn (RB) vorgesehenen Station (P) und einzelnen passierenden Fahrzeugen, bei dem in der Station über der Fahrbahn einerseits und in dem Fahrzeug andererseits jeweils mindestens eine Sendeeinrichtung (S) mit einer Lichtsenderanordnung und/oder mindestens eine Empfangseinrichtung (E) mit einer Lichtempfängeranordnung vorgesehen ist, wobei in der ortsfesten Sende- bzw. Empfangseinrichtung (SE1 ..SE7) jeweils eine den Fahrbereich der passierenden Fahrzeuge auf eine vor der Lichtsenderanordnung bzw. der Lichtempfängeranordnung liegende Bildebene (A3) abbildende optische Einrichtung (L) vorgesehen ist,
**dadurch gekennzeichnet,** daß eine oder mehrere Masken (M) mit einer Anzahl von Blendenöffnungen (B1,B2) vorgesehen sind, welche dazu dienen, getrennte Wirkflächen (F21, F22) zu definieren, wobei für die Sendeeinrichtung eine Wirkfläche (DS) und für die Empfangseinrichtung zwei getrennte Wirkflächen (DF, QF) gebildet werden,
daß die Blendenöffnungen getrennte Strahlungsbereiche (SBD, EBD und EBQ) für die Sende- und die Empfangseinrichtung bestimmen, wobei innerhalb der dafür vorgesehenen Strahlungsbereiche Daten zwischen der Station (P) und einer Fahrzeug- Sende- und Empfangseinrichtung (FSE) im Rahmen eines Dialogverkehrs bzw. durch ein Quittungssignal übertragen werden, und daß Abschlußkanten der Blendenöffnung der Sendeeinrichtung derart geformt sind, daß sich eine quer zur Fahrtrichtung scharfe Kanten (KP1, KP5) aufweisende Wirkungsfläche (DS) ergibt, aufgrung derer zumindest das Ende des Strahlungsbereichs (SBD) der Sendeeinrichtung durch einen abrupten Empfangspegelsprung in der Fahrzeug-Sende- und Empfangseinrichtung (FSE) erkannt wird und dadurch diese zur Abgabe des Quittungssignals veranlaßt wird.

2. System nach Anspruch 1,
**dadurch gekennzeichnet**, daß mehrere optische Systeme mit jeweils einer eigenen Maske oder daß ein optisches System mit einer Maske (8), dem mehrere Blendenöffnungen (3,4) gemeinsam zugeordnet sind, vorgesehen sind.

3. System nach Anspruch 1 oder 2,
**dadurch gekennzeichnet**, daß in einem gemeinsamen Gehäuse (12) jeweils eine Senderanordnung (37) mit einer optischen Einrichtung (33) und einer oder mehreren Blendenöffnungen (6) in einem kreisförmigen Sender-Maskenfeld (10) sowie eine Empfängeranordnung (17) mit einer optischen Einrichtung (13) und mit einer oder mehreren Blendenöffnungen (3,4) in einem kreisförmigen Empfänger-Maskenfeld (9) vorgesehen sind, wobei das Sender-Maskenfeld (10) und das Empfänger-Maskenfeld (9) in einer gemeinsamen Maskenwand (14) ausgebildet sind.

4. System nach Anspruch 3,
**dadurch gekennzeichnet**, daß die Maskenwand (14) mit dem Gehäuse (12) einstückig ausgebildet ist.

5. System nach Anspruch 2 bis 4
**dadurch gekennzeichnet,** daß die jeweilige Maske (M; 14) annähernd senkrecht zur Straßenoberfläche steht, wobei eine trapezförmige Blendenöffnung (3) zur Erzeugung einer rechteckigen Wirkfläche (F22) vorgesehen ist.

6. System nach einem der Ansprüche 1 bis 4,
**dadurch gekennzeichnet**, daß eine halbmondförmige Blendenöffnung (4) zur Erzeugung einer Wirkfläche mit scharfer Vorderkante (f21) vorgesehen ist.

7. System nach einem der Ansprüche 1 bis 6,
**dadurch gekennzeichnet**, daß die optische Einrichtung (L; 13,33) gegen die Fahrbahn (RB) geneigt ist, derart, daß die optische Achse (Al) die Wirkfläche (F21) bzw. den Wirkflächenbereich in einem Mittelabschnitt schneidet.

8. System nach Anspruch 7,
**dadurch gekennzeichnet**, daß die durch die Maske (M) gebildete Bildebene (A3) gegenüber der Fahrbahn und gegenüber der optischen Anordnung derart geneigt ist, daß sich die Wirkflächenebene (A4), die Objektivebene (A2) und die Bildebene (A3) in einer Linie schneiden (Scheinpflugbedingung)

9. System nach einem der vorhergehenden Ansprüche,
**dadurch gekennzeichnet**, daß die Licht-Senderanordnung in an sich bekannter Weise durch ein Sendediodenfeld (37) bzw. die Licht-Empfängeranordnung durch ein Empfangsdiodenfeld (17) gebildet wird, daß zumindest die Sendedioden (37) auf einer konkaven Rückwandfläche (38) angeordnet und/oder daß die Achsen der Dioden zu der optischen Einrichtung (33) hin radial ausgerichtet sind, wobei die Rückwandfläche (38) hinter den Sendedioden verspiegelt ist.

10. System nach Anspruch 9,
**dadurch gekennzeichnet**, daß die Gehäuseinnenseite (39,40) im Bereich zwischen den Sendedioden (37) und der Maske (34) reflektierende Eigenschaften aufweist.

11. System nach Anspruch 9 oder 10,
**dadurch gekennzeichnet**, daß im Bereich zwischen den Sende- bzw. Empfangsdioden (37,17) und der Maske (14; 34) eine lichtstreuende Vorrichtung (24) vorgesehen ist.

12. System nach einem der Ansprüche 9 bis 11,
**dadurch gekennzeichnet**, daß der zur Ausleuchtung des Fernbereiches einer Wirkfläche (F21, F22) dienende Bereich der Senderanordnung eine höhere Dichte an Sendedioden (37) aufweist als der zur Ausleuchtung des Nahbereiches der Wirkfläche dienende Sendebereich.

13. System nach einem der vorhergehenden Ansprüche,
**dadurch gekennzeichnet**, daß als Lichtstrahlung eine Infrarotstrahlung dient.

14. System nach einem der vorhergehenden Ansprüche,
**dadurch gekennzeichnet**, daß durch eine entsprechende Maskenanordnung (14) in der ortsfesten Sende- und Empfangseinrichtung (SE) eine Sende-Wirkfläche (DS) mit scharfer Abschlußkante (KP5), eine erste Empfangswirkfläche (DF) mit scharfer Abschlußkante (KP2) sowie eine zweite Empfangswirkfläche (QF) mit allseitig scharfer Umgrenzung festgelegt sind, daß die Sende-Wirkfläche (DS) sowie die erste Empfangswirkfläche (DF) für einen Dialog zwischen Fahrzeuggerät (FFE) und ortsfester Sende- und Empfangseinrichtung (FE) dient, und daß die zweite Empfangswirkfläche (QF) zur Abgabe eines Quittungssignals vom Fahrzeug an die stationäre Sende- und Empfangseinrichtung dient.

15. System nach Anspruch 14,
**dadurch gekennzeichnet**, daß die zweite Empfangswirkfläche (QF) annähernd mit dem Erfassungsbereich einer Fahrzeug-Detektoreinrichtung (SD) übereinstimmt und daß in einer ortsfesten Prüfeinrichtung überwacht wird, ob bei Feststellung eines Fahrzeugs (FZ) durch die Detektoreinrichtung (SD) gleichzeitig ein Quittungssignal empfangen wurde.

16. System nach einem der vorhergehenden Ansprüche,
**dadurch gekennzeichnet**, daß über die Breite der Fahrbahn (RB) ortsfeste Sende- und Empfangseinrichtungen (FE) in einem gegenseitigen Abstand angeordnet sind, der geringer ist als eine vorgegebene Mindest-Fahrzeugbreite, und daß die von den Sende- und Empfangseinrichtungen festgelegten Wirkflächen einander in der Breite überschneiden, jedoch miteinander fluchtende Abschlußkanten aufweisen.

## Claims

1. System for optical data transmission between a fixed-position station (P) which is provided in the zone of a roadway (RB), and individual passing vehicles, in the case of which system at least one transmitting device (S) having a light-transmitter arrangement and/or at least one receiving device (E) having a light receiver arrangement is provided in each case in the station above the roadway on the one hand and in the vehicle on the other hand, an optical device (L), which images the region of movement of the passing vehicles onto an image plane (A3) lying in front of the light transmitter arrangement or the light receiver arrangement respectively, in each case being provided in the fixed-position transmitting device or receiving device (SE1 ..SE7) respectively, characterized in that one or more masks (M) are provided with a number of shutter openings (B1, B2) which are used for the purpose of defining separate active areas (F21, F22), one active area (DS) being formed for the transmitting device and two separate active areas (DF, QF) being formed for the receiving device, in that the shutter openings define separate radiation zones (SBD, EBD and EBQ) for the transmitting device and the receiving device, data being transmitted between the station (P) and a vehicle transmitting and receiving device (FSE), in the context of dialogue traffic or by means of an acknowledgement signal within the radiation zones provided for this purpose, and in that terminating edges of the shutter opening of the transmitting device are formed in such a manner that an active area (DS) is produced which has sharp edges (KP1, KP5) transversely with respect to the direction of movement, on the basis of which active area (DS) at least the end of the radiation zone (SBD) of the transmitting device is detected by an abrupt receiving level jump in the vehicle transmitting and receiving device (FSE) and in consequence causes said device to emit the acknowledgement signal.

2. System according to Claim 1, characterized in that a plurality of optical systems each having a dedicated mask are provided, or in that an optical system having a mask (8) to which a plurality of shutter openings (3, 4) are jointly assigned are provided.

3. System according to Claim 1 or 2, characterized in that a transmitter arrangement (37) having one optical device (33) and one or more shutter openings (6) is in each case provided in a circular transmitter mask field (10), and a receiver arrangement (17) having one optical device (13) and having one or more shutter openings (3, 4) is provided in a circular receiver mask field (9), in a common housing (12), the transmitter mask field (10) and the receiver mask field (9) being constructed in a common mask wall (14).

4. System according to Claim 3, characterized in that the mask wall (14) is constructed integrally with the housing (12).

5. System according to Claims 2 to 4, characterized in that the respective mask (M; 14) is approximately at right angles to the road surface, a trapezoidal shutter opening (3) being provided in order to produce a rectangular active area (F22).

6. System according to one of Claims 1 to 4, characterized in that a half-moon-shaped shutter opening (4) is provided in order to produce an active area with a sharp front edge (F21).

7. System according to one of Claims 1 to 6, characterized in that the optical device (L; 13, 33) is inclined with respect to the roadway (RB) in such a manner that the optical axis (A1) intersects the active area (F21) or the active area zone in a centre section.

8. System according to Claim 7, characterized in that the image plane (A3) which is formed by the mask (M) is inclined with respect to the roadway and with respect to the optical arrangement in such a manner that the active area plane (A4), the objective plane (A2) and the image plane (A3) intersect on a line (Scheimpflug condition).

9. System according to one of the preceding claims, characterized in that the light transmitter arrangement is formed in a manner known per se by means of a transmitting diode array (37), and the light receiver arrangement is formed by a receiving diode array (17), in that at least the transmitting diodes (37) are arranged on a concave rear wall surface (38) and/or in that the axes of the diodes are aligned radially towards the optical device (33), the rear wall surface (38) being mirrored behind the transmitting diodes.

10. System according to Claim 9, characterized in that the housing inside (39, 40) has reflective properties in the zone between the transmitting diodes (37) and the mask (34).

11. System according to Claim 9 or 10, characterized in that a light-scattering device (24) is provided in the zone between the transmitting and receiving diodes (37, 17) respectively and the mask (14; 34).

12. System according to one of Claims 9 to 11, characterized in that that zone of the transmitter arrangement which is used to illuminate the remote zone of an active area (F21, F22) has a higher density of transmitting diodes (37) than the transmitting zone which is used to illuminate the close zone of the active area.

13. System according to one of the preceding claims, characterized in that infrared radiation is used as the light radiation.

14. System according to one of the preceding claims, characterized in that a transmitting active area (DS) having a sharp terminating edge (KP5), a first receiving active area (DF) having a sharp terminating edge (KP2) and a second receiving active area (QF) having a boundary which is sharp on all sides are defined by means of a suitable mask arrangement (14) in the fixed-position transmitting and receiving device (SE), in that the transmitting active area (DS) and the first receiving active area (DF) are used for a dialogue between the vehicle apparatus (FFE) and the fixed-position transmitting and receiving device (FE), and in that the second receiving active area (QF) is used for emitting an acknowledgement signal from the vehicle to the stationary transmitting and receiving device.

15. System according to Claim 14, characterized in that the second receiving active area (QF) corresponds approximately to the detection zone of a vehicle detector device (SD) and in that a fixed-position test device is used to monitor whether an acknowledgement signal has been received at the same time when the detector device (SD) detects a vehicle (FZ).

16. System according to one of the preceding claims, characterized in that fixed-position transmitting and receiving devices (FE) are arranged over the width of the roadway (RB) spaced apart from one another at a distance which is less than a predetermined minimum vehicle width, and in that the active areas defined by the transmitting and receiving devices overlap one another in width but have terminating edges which are aligned with one another.

## Revendications

1. Système pour la transmission optique de données entre un poste (P) prévu au voisinage d'une voie de circulation (RB), et des véhicules individuels qui passent, et dans lequel respectivement au moins un dispositif d'émission (S) comportant un dispositif à source de lumière et/ou au moins un dispositif de réception (E) comportant un dispositif de réception de lumière est prévu, d'une part, dans le poste au-dessus de la voie de circulation et, d'autre part, dans le véhicule, et respectivement un dispositif optique (L), qui forme l'image de la zone de déplacement des véhicules, qui passent, dans un plan image (A3) situé en amont du dispositif d'émission de lumière ou du dispositif de réception de lumière, dans le dispositif fixe d'émission ou de réception (SE1...SE7),
caractérisé par le fait qu'il est prévu un ou plusieurs masques (M) comportant un nombre d'ouvertures de diaphragmes (F1,F2), qui servent à définir des surfaces actives séparées (21,22), une surface active (DS) étant formée pour le dispositif d'émission tandis que deux surfaces actives séparées (DF,QF) sont formées pour le dispositif de réception,
que les ouvertures de diaphragmes déterminent des zones séparées de rayonnement (SBD,EBD et EBQ) pour le dispositif d'émission et le dispositif de réception, auquel cas à l'intérieur des zones de rayonnement prévues à cet effet, des données sont transmises entre le poste (N) et un dispositif d'émission et de réception (SE) d'un véhicule, dans le cadre d'un trafic en dialogue ou bien au moyen d'un signal d'accusé de réception, et que les bords terminaux de l'ouverture de diaphragme du dispositif d'émission sont formés de telle sorte qu'on obtient une surface active (DS), qui comporte des arêtes vives (KP1, KP5) transversalement par rapport à la direction du déplacement, et sur la base de laquelle au moins l'extrémité de la zone de rayonnement (SBD) du dispositif d'émission est identifiée par un saut brusque du niveau de réception dans le dispositif (FSE) d'émission et de réception du véhicule et que de ce fait, ce dispositif est déclenché pour la délivrance de l'accusé de réception.

2. Système suivant la revendication 1, caractérisé par le fait que plusieurs systèmes optiques comportant chacun un masque particulier sont prévus ou bien qu'il est prévu un système optique comportant un masque (8), auquel sont associées en commun plusieurs ouvertures de diaphragme (3,4).

3. Système suivant la revendication 1 ou 2, caractérisé par le fait que dans un boîtier commun (12) sont prévus respectivement un dispositif émetteur (37) comportant un dispositif optique (33) et une ou plusieurs ouvertures de diaphragmes (6) dans une zone circulaire de masque d'émetteur (10), ainsi qu'un dispositif récepteur (17) comportant un dispositif optique (13) et une ou plusieurs ouvertures de diaphragme (3,4) dans une zone circulaire de masque de récepteur (9), la zone de masque de récepteur (10) et la zone de masque de récepteur (9) étant réalisées dans une paroi commune de masque (14).

4. Système suivant la revendication 3, caractérisé par le fait que la paroi de masque (14) est réalisée d'un seul tenant avec le boîtier (12).

5. Système suivant la revendication 2 à 4, caractérisé par le fait que le masque respectif (M; 14) est approximativement perpendiculaire à la surface de la chaussée, auquel cas une ouverture de diaphragme de forme trapézoïdale (3) est prévue pour l'obtention d'une surface active rectangulaire (F22).

6. Système suivant l'une des revendications 1 à 4, caractérisé par le fait qu'il est prévu une ouverture de diaphragme en forme de croissant (4) servant à produire une surface active possédant un bord avant à arête vive (f21).

7. Système suivant l'une des revendications 1 à 6, caractérisé par le fait que le dispositif optique (L;13,33) est incliné par rapport à la chaussée (RB) de telle sorte que l'axe optique (A1) recoupe la surface active (F21) ou la région de la surface active dans une section médiane.

8. Système suivant la revendication 7, caractérisé par le fait que le plan image (A3) formé par le masque (M) est incliné par rapport à la chaussée et par rapport au dispositif optique de telle sorte que le plan (A4) de la surface active, le plan (A2) de l'objectif et le plan image (A3) se coupent suivant une droite (condition de coïncidence apparente).

9. Système suivant l'une des revendications précédentes, caractérisé par le fait que le dispositif d'émission de lumière est formé de façon connue en soi par un panneau de diodes émissives (37), le dispositif de réception de lumière est formé par un panneau de diodes réceptrices (17) , qu'au moins les diodes émissives (37) sont disposées sur une surface concave (38) de la paroi arrière et/ou que les axes des diodes sont dirigés radialement vers le dispositif optique (33), la surface (38) de la paroi arrière étant rendue réfléchissante en arrière des diodes émissives.

10. Système suivant la revendication 9, caractérisé par le fait que la face intérieure (39,40) du boîtier possède des caractéristiques réfléchissantes dans la zone située entre les diodes émissives (37) et le masque (34).

11. Système suivant la revendication 9 ou 10, caractérisé par le fait qu'un dispositif (24) de dispersion de la lumière est prévu dans la zone située entre les diodes émissives ou réceptrices (37,17) et le masque (14;34)

12. Système suivant la revendication 9 à 11, caractérisé par le fait que la zone du dispositif d'émission, qui sert à éclairer la zone distante d'une surface active (F21,F22), possède une densité de diodes émissives (37), supérieure à celle de la zone émettrice utilisée pour éclairer la zone proche de la surface active.

13. Système suivant l'une des revendications précédentes, caractérisé par le fait qu'on utilise comme rayonnement lumineux un rayonnement infrarouge.

14. Système suivant l'une des revendications précédentes, caractérisé par le fait qu'une surface active d'émission (DS) possédant un bord terminal en forme d'arête vive (KP5), une première surface active de réception (DF) possédant un bord de terminaison à arête vive (KP2) ainsi qu'une seconde surface de réception (QF) comportant une limitation à arête vive de tous côtés sont fixées par un dispositif à masque correspondant (14) situé dans le dispositif fixe d'émission et de réception (SE), que la surface active d'émission (DS) ainsi que la première surface active de réception (DF) sont utilisées pour un dialogue entre l'appareil (FFE) monté dans le véhicule et dans le dispositif fixe d'émission et de réception (FE), et que la seconde surface active de réception (QF) est utilisée pour la délivrance d'un signal d'accusé de réception par le véhicule au dispositif fixe d'émission et de réception.

15. Système suivant la revendication 14, caractérisé par le fait que la seconde surface active de réception (QF) coïncide approximativement avec la zone de détection d'un dispositif détecteur (SD) monté sur le véhicule et que dans un dispositif fixe de contrôle, un contrôle est exécuté pour déterminer si, lors de la détection d'un véhicule (FZ), un signal d'accusé de réception a été reçu simultanément par le dispositif détecteur (SD).

16. Système suivant l'une des revendications précédentes, caractérisé par le fait que des dispositifs fixes d'émission et de réception (FE) sont disposés sur la largeur de la voie de circulation (RB), à une distance réciproque qui est inférieure à une largeur minimale prédéterminée de véhicule, et que les surfaces actives, qui sont fixées par les dispositifs d'émission et de réception, se recoupent entre elles en largeur, mais possèdent des bords terminaux alignés entre eux.
